# EUROPÄISCHE PATENTSCHRIFT

(11) **EP 2 819 844 B1**
(45) Veröffentlichungstag und Bekanntmachung des Hinweises auf die Patenterteilung: **05.10.2016**
(21) Anmeldenummer: 13700900.7
(22) Anmeldetag: 21.01.2013
(51) Int. Cl.: B32B 17/10, C03C 17/36, C03C 27/00

(54) **VERBUNDSCHEIBE MIT SONNENSCHUTZ- UND WÄRMESCHUTZFUNKTION**
COMPOUND GLAZING WITH SUN AND HEAT PROTECTION FUNCTION
PLAQUE COMPOSITE DOTÉE D'UNE FONCTION DE PROTECTION CONTRE LE SOLEIL ET LA CHALEUR

(30) Priorität: 27.02.2012 EP 12157067
(43) Veröffentlichungstag der Anmeldung: 07.01.2015
(73) Patentinhaber: Saint-Gobain Glass France, 92400 Courbevoie (FR)
(72) Erfinder: MANZ, Florian, 52064 Aachen (DE)
(74) Vertreter: Gebauer, Dieter Edmund
(86) Internationale Anmeldenummer: PCT/EP2013/050999
(87) Internationale Veröffentlichungsnummer: WO 2013/127563

(56) Entgegenhaltungen:
- EP-A1- 2 489 507
- EP-A2- 1 060 876
- WO-A2-2009/150343
- US-B2- 7 582 356

## Beschreibung

Die Erfindung betrifft eine Verbundscheibe mit Sonnenschutz- und Wärmeschutzfunktion, ein Verfahren zu deren Herstellung und deren Verwendung.

Der Innenraum eines Kraftfahrzeugs kann sich im Sommer bei hohen Umgebungstemperaturen und intensiver direkter Sonneneinstrahlung stark erwärmen. Um einen akzeptablem thermischen Komfort für die Insassen zu erreichen, kann der Innenraum klimatisiert werden, was jedoch zu einem erhöhten Kraftstoffverbrauch und dem damit verbundenen erhöhten Ausstoß von Treibhausgasen, insbesondere CO₂ führt.

Es sind auch Scheiben mit Sonnenschutzfunktion bekannt. Diese Scheiben sind mit einer Beschichtung versehen, welche Teile der Sonnenstrahlung, insbesondere IR-Strahlung reflektieren und somit die Aufheizung des Fahrzeuginnenraums vermindern. Solche Beschichtungen sind beispielsweise aus EP 2 268 588 A2, EP 1 993 829 A2 und EP 1 744 995 A2 bekannt. Die Scheibe erwärmt sich bei hohen Umgebungstemperaturen aber dennoch und strahlt Wärme in den Innenraum des Fahrzeugs ab.

Ist die Außentemperatur geringer als die Temperatur im Fahrzeuginnenraum, was insbesondere im Winter auftritt, so wirkt eine kalte Scheibe als Wärmesenke, die von den Insassen als unangenehm empfunden wird.

Aus DE 199 27 683 C1 ist eine Verbundscheibe bekannt, welche mit einer Sonnenschutzbeschichtung und mit einer Wärmestrahlen reflektierenden Beschichtung (Low-E-Beschichtung, Wärmeschutzbeschichtung) versehen ist. Die Low-E-Beschichtung ist dabei eine mit Fluor dotierte Zinnoxidschicht. Soll die Transmission von sichtbarem Licht durch die Verbundscheibe verringert werden, was beispielsweise bei Seiten- oder Heckscheiben und insbesondere bei Dachscheiben häufig gewünscht ist, so wird vorgeschlagen, eine Scheibe oder Folie der Verbundscheibe einzufärben oder zu bedrucken. Das ist mit einem Mehraufwand bei der Herstellung der Scheibe verbunden. Zudem enthält dunkles Glas einen großen Anteil an typischerweise Eisenoxid, was zur Korrosion der funktionellen Beschichtungen führen kann.

Die europäische Patentanmeldung EP 1060876 A2 zeigt ein Verbundglas mit einer beispielsweise Silber enthaltenden Sonnenschutzschicht. Das US-Patent Nr. 7582356 B2 und die internationale Patentanmeldung WO 2009/150343 A2 zeigen jeweils ein Substrat mit einer Wärmeschutzschicht, die beispielsweise Niob enthält.

Die Aufgabe der vorliegenden Erfindung besteht darin, eine verbesserte Verbundscheibe mit Sonnenschutz- und Wärmeschutzfunktion sowie ein Verfahren zu deren Herstellung bereitzustellen.

Die Aufgabe der vorliegenden Erfindung wird erfindungsgemäß durch eine Verbundscheibe mit Sonnenschutz- und Wärmeschutzfunktion gemäß Anspruch 1 gelöst. Bevorzugte Ausführungen gehen aus den Unteransprüchen hervor.

Die erfindungsgemäße Verbundscheibe mit Sonnenschutz- und Wärmeschutzfunktion aus einer Außenscheibe mit einer Außenfläche und einer Innenfläche, einer Innenscheibe mit einer Außenfläche und einer Innenfläche und einer thermoplastischen Zwischenschicht umfasst zumindest die folgenden Merkmale:
- eine Sonnenschutzbeschichtung mindestens auf der Innenfläche der Außenscheibe, auf der Außenfläche der Innenscheibe oder in der thermoplastischen Zwischenschicht und
- eine Wärmeschutzbeschichtung auf der Innenfläche der Innenscheibe,
wobei die Sonnenschutzbeschichtung mindestens eine funktionelle Schicht umfasst, die zumindest Silber enthält, und wobei die Wärmeschutzbeschichtung mindestens eine funktionelle Schicht umfasst, die zumindest ein Metall aus der Gruppe bestehend aus Niob, Tantal, Molybdän und Zirkonium enthält.

Die erfindungsgemäße Verbundscheibe ist dafür vorgesehen, in einer Öffnung, beispielsweise eines Fahrzeugs oder eines Gebäudes, den Innenraum gegenüber der äußeren Umgebung abzutrennen. Mit Außenscheibe wird im Sinne der Erfindung die Scheibe der Verbundscheibe bezeichnet, die dafür vorgesehen ist, in Einbaulage der äußeren Umgebung zugewandt zu sein. Mit Innenscheibe wird im Sinne der Erfindung die Scheibe der Verbundscheibe bezeichnet, die dafür vorgesehen ist, in Einbaulage dem Innenraum zugewandt zu sein. Mit Außenflächen werden im Sinne der Erfindung diejenigen Oberflächen der Außenscheibe und der Innenscheibe bezeichnet, die dafür vorgesehen sind, der äußeren Umgebung zugewandt zu sein. Mit Innenflächen werden im Sinne der Erfindung diejenigen Oberflächen der Außenscheibe und der Innenscheibe bezeichnet, die dafür vorgesehen sind, dem Innenraum zugewandt zu sein. In der erfindungsgemäßen Verbundscheibe sind die Innenfläche der Außenscheibe und die Außenfläche der Innenscheibe einander zugewandt und über die thermoplastische Zwischenschicht miteinander verbunden.

Enthält eine Schicht oder ein sonstiges Element zumindest ein Material, so schließt das im Sinne der Erfindung den Fall ein, dass die Schicht aus dem Material besteht.

Eine Beschichtung im Sinne der Erfindung kann zwei oder mehrere einzelne Schichten unterschiedlichen Materials umfassen. Eine Beschichtung kann prinzipiell aber auch nur eine einzelne Schicht umfassen.

Ist eine erste Schicht einer Beschichtung oberhalb einer zweiten Schicht der Beschichtung angeordnet, so bedeutet dies im Sinne der Erfindung, dass die erste Schicht weiter von der Oberfläche, auf welche die Beschichtung aufgebracht ist, entfernt angeordnet ist als die zweite Schicht. Ist eine erste Schicht einer Beschichtung unterhalb einer zweiten Schicht der Beschichtung angeordnet ist, so bedeutet dies im Sinne der Erfindung, dass die zweite Schicht weiter von der Oberfläche, auf welche die Beschichtung aufgebracht ist, entfernt angeordnet ist als die erste Schicht. Ist eine erste Schicht einer Beschichtung oberhalb oder unterhalb einer zweiten Schicht der Beschichtung angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird. Ist eine erste Schicht zwischen zwei weiteren Schichten angeordnet, so bedeutet dies im Sinne der Erfindung, dass die eine weitere Schicht oberhalb der ersten Schicht und die andere weitere Schicht unterhalb der ersten Schicht angeordnet ist.

Der besondere Vorteil der Erfindung liegt in der Kombination der Sonnenschutzbeschichtung und der Wärmeschutzbeschichtung. Durch die Sonnenschutzbeschichtung werden Anteile der Sonnenstrahlung, insbesondere im infraroten Spektralbereich reflektiert. Dadurch wird die Erwärmung des Innenraums, der von der Verbundscheibe begrenzt wird, infolge direkter Sonneneinstrahlung vermindert. Zudem verringert die Sonnenschutzbeschichtung die Erwärmung der Verbundscheibe, insbesondere die Erwärmung der in Einfallsrichtung der Sonnenstrahlung hinter der Sonnenschutzbeschichtung angeordneten Elemente wie der Innenscheibe. Eine solche Erwärmung führt bei herkömmlichen Verbundscheiben zur Aussendung von Wärmestrahlung ausgehend von der Verbundscheibe in den Innenraum, wobei die Wärmestrahlung bei typischerweise auftretenden Scheibentemperaturen Wellenlängen oberhalb etwa 5000 nm aufweist. Durch die Wärmeschutzbeschichtung (häufig auch Low-E-Beschichtung genannt) wird einerseits die Abstrahlung der langwelligen Wärmestrahlung der Verbundscheibe in den Innenraum weiter verringert. Die Wärmeschutzbeschichtung verleiht der Verbundscheibe also eine niedrige innenraumseitige Emissivität. Mit Emissivität wird dabei das Maß bezeichnet, welches angibt, wie viel Wärmestrahlung die Scheibe im Vergleich zu einem idealen Wärmestrahler (einem schwarzen Körper) abgibt. Andererseits verringert die Wärmeschutzbeschichtung bei niedrigen Außentemperaturen die Abstrahlung der Wärme des Innenraums in die äußere Umgebung. Dadurch wird die erfindungsgemäße Verbundscheibe von Personen im Innenraum verglichen mit herkömmlichen Verbundscheiben in deutlich geringerem Maße als unangenehme Wärmesenke empfunden. Das Raumklima des Innenraums wird somit sowohl bei hohen Außentemperaturen (im Sommer) als auch bei niedrigen Außentemperaturen (im Winter) deutlich verbessert.

Die erfindungsgemäße Wärmeschutzbeschichtung verringert zudem die Transmission von sichtbarem Licht durch die Verbundscheibe. Die erfindungsgemäße Verbundscheibe ist daher besonders für Verwendungen geeignet, bei denen keine gesetzlichen Regelungen für die Lichttransmission bestehen und bei denen eine verringerte Lichttransmission aus beispielsweise ästhetischen oder thermischen Gründen gewünscht sein kann, bei Fahrzeugen insbesondere als Seitenscheibe hinter der B-Säule, Dreiecksscheibe, Heckscheibe oder Dachscheibe. Die Verwendung von getönten Gläsern oder gefärbten Polymerschichten kann dadurch vermieden werden, was den Herstellungsprozess der Verbundscheibe vereinfacht und die Korrosionsgefahr für die funktionellen Schichten, die bei getönten Scheiben durch den Zusatz von beispielsweise Eisenoxid hervorgerufen wird, verringert. Das ist ein weiterer großer Vorteil der Erfindung.

Die erfindungsgemäße Wärmeschutzbeschichtung umfasst mindestens eine funktionelle Schicht, die zumindest ein Metall aus der Gruppe bestehend aus Niob (Nb), Tantal (Ta), Molybdän (Mo) und Zirkonium (Zr) enthält. Die Wärmeschutzbeschichtung ist auf der Innenfläche der Innenscheibe angeordnet. Das ist besonders vorteilhaft im Hinblick auf den thermischen Komfort im Innenraum, der im Sommer durch der Verringerung der Abstrahlung von Wärmestrahlung der gesamten Verbundscheibe in den Innenraum, im Winter durch die Verringerung der Abstrahlung von Wärme aus dem Innenraum erreicht wird.

Die Wärmeschutzbeschichtung umfasst bevorzugt mindestens zwei funktionelle Schichten, welche die zumindest ein Metall aus der Gruppe bestehend aus Niob, Tantal, Molybdän und Zirkonium enthalten. Damit werden besonders gute Ergebnisse hinsichtlich der verringerten Emissivität erzielt.

Das Metall aus der Gruppe bestehend aus Niob, Tantal, Molybdän und Zirkonium kann ganz oder teilweise nitriert sein (NbN, TaN, MoN, ZrN). Das ist besonders vorteilhaft im Hinblick auf die chemische Stabilität der funktionellen Schicht.

Die erfindungsgemäße funktionelle Schicht der Wärmeschutzbeschichtung absorbiert und reflektiert Teile des von außen einfallenden sichtbaren Lichtes. Die Transmission durch die erfindungsgemäße Verbundscheibe im sichtbaren Spektralbereich wird dadurch verringert. Die gewünschte Transmission durch die Verbundscheibe kann vom Fachmann durch die Schichtdicke der funktionellen Schicht oder der funktionellen Schichten gewählt werden. Somit können dunkle Scheiben realisiert werden, die besonders wenig der von außen einfallenden Sonnenstrahlung im sichtbaren Bereich in den Innenraum transmittieren. Die erfindungsgemäße Wärmeschutzbeschichtung kann so gestaltet werden, dass die innenraumseitige Reflexion im sichtbaren Spektralbereich merklich gegenüber herkömmlich getönten Scheiben reduziert ist. Das ist ein großer Vorteil der Erfindung gegenüber herkömmlich getönten Scheiben, bei denen innenraumseitige Reflexionen häufig störend auffallen.

Die Dicke einer funktionellen Schicht der Wärmeschutzbeschichtung beträgt bevorzugt von 1 nm bis 35 nm, besonders bevorzugt von 3 nm bis 25 nm und kann beispielsweise von 5 nm bis 15 nm betragen. Umfasst die Wärmeschutzbeschichtung mehr als eine funktionelle Schicht, so beträgt die Gesamtschichtdicke aller funktionellen Schichten bevorzugt kleiner oder gleich 50 nm. In diesen Bereichen für die Dicke der einzelnen funktionellen Schichten und die Gesamtdicke aller funktionellen Schichten werden besonders gute Ergebnisse im Hinblick auf die verringerte Transmission durch die Verbundscheibe im sichtbaren Spektralbereich und auf die verringerte Emissivität erreicht. Die einzelnen funktionellen Schichten können die gleiche Dicke oder unterschiedliche Dicken aufweisen.

Die Wärmeschutzbeschichtung umfasst bevorzugt weiter zumindest eine dielektrische Schicht. Die dielektrische Schicht enthält oder besteht aus einem dielektrischen Material und ist bevorzugt transparent. Die dielektrische Schicht ist bevorzugt innenraumseitig einer jeden funktionellen Schicht angeordnet. In einer vorteilhaften Ausgestaltung der Erfindung ist zumindest eine funktionelle Schicht, zwischen zwei dielektrischen Schichten angeordnet. Das bedeutet im Sinne der Erfindung, dass die eine dielektrische Schicht oberhalb der funktionellen Schicht und die andere dielektrische Schicht unterhalb der funktionellen Schicht angeordnet ist. Es ist besonders vorteilhaft, wenn jede funktionelle Schicht zwischen zwei dielektrischen Schichten angeordnet ist. Die funktionellen Schichten und die dielektrischen Schichten sind dabei bevorzugt so angeordnet, dass zwischen jeweils zwei benachbarten funktionellen Schichten, zwischen denen keine weitere funktionelle Schicht angeordnet ist, zumindest eine dielektrische Schicht angeordnet ist und dass oberhalb der obersten funktionellen Schicht zumindest eine weitere dielektrische Schicht angeordnet ist und dass unterhalb der untersten funktionellen Schicht zumindest eine weitere dielektrische Schicht angeordnet ist. Die funktionelle Schicht muss sich aber nicht notwendigerweise in direktem Kontakt mit den dielektrischen Schichten befinden. Es können auch eine oder mehrere weitere Schichten zwischen der funktionellen Schicht und der dielektrischen Schicht angeordnet sein.

Die dielektrische Schicht der Wärmeschutzbeschichtung enthält bevorzugt zumindest Siliziumnitrid (Si₃N₄). Das Siliziumnitrid ist besonders bevorzugt dotiert, insbesondere mit Aluminium. Das ist besonders vorteilhaft im Hinblick auf die Alterungsbeständigkeit der dielektrischen Schicht. Zudem wird eine schnellere Abscheidung der dielektischen Schicht, beispielsweise durch magnetfeldunterstützte Kathodenzerstäubung erreicht. Der Anteil der Dotierung an der dielektrischen Schicht beträgt ganz besonders bevorzugt von 5 Gew.-% bis 10 Gew.-%. Damit werden besonders gute Ergebnisse erzielt.

Die dielektrische Schicht der Wärmeschutzbeschichtung kann aber auch andere geeignete dielektrische Materialen enthalten, beispielsweise Oxide wie SnO₂, Bi₂O₃, TiO₂, ZnO, SiO₂ und / oder Nitride wie AIN. Zumindest eine der dielektrischen Schichten kann auch eine Abfolge von Lagen mit hohem und niedrigem Brechungsindex umfassen, beispielsweise Si₃N₄/SiO₂ oder Si₃N₄/SiO₂/Si₃N₄.

Die Dicke der dielektrischen Schicht der Wärmeschutzbeschichtung beträgt bevorzugt von 5 nm bis 120 nm, besonders bevorzugt von 10 nm bis 70 nm, ganz besonders bevorzugt von 40 nm bis 60 nm. Damit werden besonders gute Ergebnisse bezüglich der Farbwirkung der Beschichtung und im Hinblick auf Reflexionen an der Beschichtung erreicht.

Die Wärmeschutzbeschichtung umfasst bevorzugt zumindest eine Opferschicht. Die Opferschicht enthält bevorzugt zumindest Titan und / oder Nickelchrom. Die Opferschicht ist bevorzugt zwischen zumindest einer funktionellen Schicht und zumindest einer dielektrischen Schicht angeordnet. Die Opferschicht befindet sich bevorzugt in direktem Kontakt zu der funktionellen Schicht. Besonders bevorzugt befindet sich jede funktionelle Schicht in direktem Kontakt mit zumindest einer Opferschicht. Es ist besonders vorteilhaft, wenn jede funktionelle Schicht zwischen zwei Opferschichten angeordnet ist, wobei sich die funktionelle Schicht bevorzugt in direktem Kontakt zu den beiden sie umgebenden Opferschichten befindet. Durch die Opferschicht wird ein Schutz der funktionellen Schicht bei Erwärmung, insbesondere während der Herstellung der erfindungsgemäßen Verbundscheibe erreicht. Die Dicke der Opferschicht liegt bevorzugt in der Größenordnung einiger Nanometer und beträgt beispielsweise von 1 nm bis 3 nm. Die Opferschicht kann aber auch eine Dicke von weniger als 1 nm aufweisen.

Die Sonnenschutzbeschichtung reflektiert Anteile der einfallenden Sonnenstrahlung außerhalb des sichtbaren Spektralbereichs, insbesondere im infraroten Spektralbereich. Durch die Sonnenschutzbeschichtung wird die Aufheizung des Innenraums durch direkte Sonneneinstrahlung verringert.

Die Sonnenschutzbeschichtung umfasst erfindungsgemäß zumindest eine funktionelle Schicht. Die funktionelle Schicht enthält zumindest Silber. Die funktionelle Schicht kann auch zumindest eine silberhaltige Legierung enthalten.

In einer vorteilhaften Ausgestaltung der Erfindung umfasst die Sonnenschutzbeschichtung zumindest zwei funktionelle Schichten, besonders bevorzugt zwei oder drei funktionelle Schichten. Sonnenschutzbeschichtungen mit mehreren funktionellen Schichten ermöglichen eine hohe Reflektivität für InfrarotStrahlung bei gleichzeitig hoher Transmission im sichtbaren Spektralbereich. Sonnenschutzbeschichtungen mit mehr als drei funktionellen Schichten erfordern jedoch eine technisch aufwendige und kostenintensive Herstellung.

Die Dicke jeder funktionellen Schicht der Sonnenschutzbeschichtung beträgt bevorzugt von 5 nm bis 25 nm, besonders bevorzugt von 10 nm bis 20 nm. Die Gesamtschichtdicke aller funktionellen Schichten der Sonnenschutzbeschichtung beträgt bevorzugt von 20 nm bis 80 nm, besonders bevorzugt von 30 nm bis 60 nm. In diesen Bereichen für die Dicke der funktionellen Schicht und die Gesamtdicke aller funktionellen Schichten werden besonders gute Ergebnisse hinsichtlich der Sonnenschutzfunktion und der Transparenz erreicht.

Die Sonnenschutzbeschichtung umfasst bevorzugt zumindest eine dielektrische Schicht. Jede funktionelle Schicht ist besonders bevorzugt zwischen zwei dielektrischen Schichten angeordnet. Die funktionellen Schichten und die dielektrischen Schichten sind dabei bevorzugt so angeordnet, dass zwischen jeweils zwei benachbarten funktionellen Schichten, zwischen denen keine weitere funktionelle Schicht angeordnet ist, zumindest eine dielektrische Schicht angeordnet ist und dass oberhalb der obersten funktionellen Schicht zumindest eine weitere dielektrische Schicht angeordnet ist und dass unterhalb der untersten funktionellen Schicht zumindest eine weitere dielektrische Schicht angeordnet ist. Die dielektrischen Schichten der Sonnenschutzbeschichtung enthalten bevorzugt zumindest Siliziumnitrid. Das Siliziumnitrid kann Dotierungen aufweisen, insbesondere Aluminium. Die dielektrischen Schichten weisen bevorzugt Dicken von 10 nm bis 100 nm, besonders bevorzugt von 20 nm bis 70 nm.

Die dielektrischen Schichten der Sonnenschutzbeschichtung können aber auch andere geeignete, dem Fachmann bekannte Materialien enthalten, beispielsweise zumindest ein Metalloxid wie SnO₂, Bi₂O₃, TiO₂, ZnO und / oder zumindest ein Metallnitrid wie AIN.

Die Sonnenschutzbeschichtung kann weitere Schichten umfassen, die dem Fachmann an sich bekannt sind, beispielsweise Glättungsschichten und / oder Blockerschichten.

In einer vorteilhaften Ausgestaltung der Erfindung ist die Sonnenschutzbeschichtung auf die Innenfläche der Außenscheibe aufgebracht. Die Sonnenschutzbeschichtung ist dabei zwischen der Außenscheibe und der thermoplastischen Zwischenschicht angeordnet und vorteilhaft vor Korrosion und sonstiger Beschädigung geschützt. In einer vorteilhaften Ausgestaltung erstreckt sich die Sonnenschutzbeschichtung über die gesamte Oberfläche des transparenten Substrats, abzüglich eines umlaufenden rahmenförmigen beschichtungsfreien Bereichs mit einer Breite von 2 mm bis 20 mm, bevorzugt von 5 mm bis 10 mm. Der beschichtungsfreie Bereich wird bevorzugt durch die thermoplastische Zwischenschicht oder einen Acrylatkleber als Dampfdiffusionssperre hermetisch versiegelt. Dadurch wird die Sonnenschutzbeschichtung vorteilhaft vor Feuchtigkeit und Luftsauerstoff geschützt.

In einer alternativen vorteilhaften Ausgestaltung der Erfindung enthält die thermoplastische Zwischenschicht (3) eine Trägerfolie (6), welche die Sonnenschutzbeschichtung (4) aufweist. Die Sonnenschutzbeschichtung ist auf der Trägerfolie aufgebracht, welche über zumindest eine erste thermoplastische Folie mit der Außenscheibe und über zumindest eine zweite thermoplastische Folie mit der Innenscheibe verbunden ist. Die Sonnenschutzbeschichtung ist somit in die thermoplastische Zwischenschicht eingelagert, welche durch die Trägerfolie und die beiden thermoplastischen Folien gebildet wird, und ist vorteilhaft vor Beschädigungen oder Korrosion geschützt. Die Trägerfolie enthält bevorzugt zumindest ein Polyester und / oder ein Polyimid, besonders bevorzugt ein thermoplastisches Polyester, beispielsweise Polyethylennaphthalat (PEN) oder Polyethylenterephthalat (PET). Die Trägerfolie weist bevorzugt eine Dicke von 10 µm bis 500 µm, besonders bevorzugt von 15 µm bis 200 µm und ganz besonders bevorzugt von 20 µm bis 100 µm auf, beispielsweise 25 µm oder 50 µm. Das ist besonders vorteilhaft im Hinblick auf die Stabilität und Verarbeitbarkeit der Trägerfolie. Die Sonnenschutzbeschichtung auf der Trägerfolie erstreckt sich bevorzugt nicht bis zu den seitlichen Rändern der Verbundscheibe, sondern ist seitlich umlaufend von der thermoplastischen Zwischenschicht umgeben. Das ist besonders vorteilhaft im Hinblick auf den Schutz der Sonnenschutzbeschichtung vor Korrosion. Die Trägerfolie kann dazu beispielsweise einen umlaufenden beschichtungsfreien Randbereich aufweisen. Alternativ kann die Trägerfolie eine geringere Größe als die Innenscheibe, die Außenscheibe und die thermoplastischen Folien aufweisen und geeignet im Verbund angeordnet sein.

Die Sonnenschutzbeschichtung kann alternativ aber auch erfindungsgemäß auf die Außenfläche der Innenscheibe aufgebracht sein.

Die Sonnenschutzbeschichtung und / oder die Wärmeschutzbeschichtung kann auch beschichtungsfreie Bereiche umgeben, die beispielsweise als Datenübertragungsfenster oder Kommunikationsfenster dienen.

Die Außenscheibe und / oder die Innenscheibe enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und / oder Gemische davon. Beispiele geeigneter Gläser sind aus DE 697 31 268 T2, Seite 8, Absatz [0053], bekannt. Das Glas kann vorgespannt, teilvorgespannt oder nichtvorgespannt sein.

Die Außenscheibe und / oder die Innenscheibe weist erfindungsgemäß eine Transmission im sichtbaren Spektralbereich von größer 70%, bevorzugt größer 85% auf. Hierbei ist die Transmission der Scheiben ohne Sonnenschutzbeschichtung und ohne Wärmeschutzbeschichtung gemeint. Die Außenscheibe und / oder die Innenscheibe sind bevorzugt farblos oder weisen nur eine geringe Färbung oder Tönung auf. Die erfindungsgemäße Wärmeschutzbeschichtung verringert die Transmission im sichtbaren Spektralbereich, so dass auch ohne getönte Scheiben oder gefärbte Folien eine Abdunklung der Verbundscheibe erreicht wird. Der besondere Vorteil gegenüber der Verwendung von getönten Scheiben oder gefärbten Folien liegt in einer einfacheren Herstellung des Verbundglases und einer geringeren Korrosionsanfälligkeit der funktionellen Schichten. Natürlich können alternativ auch getönte oder gefärbte Scheiben und / oder gefärbte Folien verwendet werden, um beispielsweise die Transmission durch die Verbundscheibe weiter zu reduzieren oder aus ästhetischen Gründen. Getönte Scheiben oder gefärbte Folien werden zwar infolge absorbierter Sonnenstrahlung stärker erwärmt, die Abstrahlung von Wärmestrahlung in den Innenraum wird jedoch durch die erfindungsgemäße Wärmeschutzbeschichtung wirksam verringert.

Die Dicke der Außenscheibe und die Dicke der Innenscheibe können breit variieren und so hervorragend den Erfordernissen im Einzelfall angepasst werden. Vorzugsweise werden Scheiben mit den Standardstärken von 1,0 mm bis 25 mm und besonders bevorzugt von 1,4 mm bis 3,5 mm verwendet. Die Außenscheibe und die Innenscheibe können die gleiche Dicke oder unterschiedliche Dicken aufweisen.

Die Größe der erfindungsgemäßen Verbundscheibe kann breit variieren und richtet sich nach der erfindungsgemäßen Verwendung. Die Verbundscheibe weist beispielsweise im Fahrzeugbau und Architekturbereich übliche Flächen von 200 cm² bis zu 4 m² auf.

Die Außenscheibe und die Innenscheibe können eine beliebige dreidimensionale Form aufweisen. Vorzugsweise hat die dreidimensionale Form keine Schattenzonen, so dass die Scheiben beispielsweise durch Kathodenzerstäubung beschichtet werden können. Die Außenscheibe und die Innenscheibe sind bevorzugt plan oder leicht oder stark in einer Richtung oder in mehreren Richtungen des Raumes gebogen.

Die mit der Wärmeschutzbeschichtung versehene Innenscheibe und gegebenenfalls die mit der Sonnenschutzbeschichtung versehene Außenscheibe sind bevorzugt so ausgebildet, dass sie erhitzt, aufgeschmolzen, getempert, konvex oder konkav gebogen, bombiert und / oder emailliert werden können. Es hat sich gezeigt, dass die erfindungsgemäße Wärmeschutzbeschichtung und die erfindungsgemäße Sonnenschutzbeschichtung dazu geeignet sind.

Die thermoplastische Zwischenschicht enthält bevorzugt zumindest einen thermoplastischen Kunststoff, beispielsweise Polyvinylbutyral (PVB), Ethylenvinylacetat (EVA), Polyurethan (PU), Polyethylenterephthalat (PET Die thermoplastische Zwischenschicht wird bevorzugt durch eine thermoplastische Folie gebildet, über die die Außenscheibe und die Innenscheibe miteinander verbunden werden und die bevorzugt eine Dicke von 0,3 mm bis 0,9 mm aufweist. Die thermoplastische Zwischenschicht kann auch durch zwei oder mehrere solcher thermoplastischer Folien gebildet werden. Zwischen den thermoplastischen Folien kann beispielsweise eine beschichtete Trägerfolie angeordnet sein. Die Dicke der gesamten thermoplastischen Zwischenschicht beträgt bevorzugt von 0,3 mm bis 2 mm, besonders bevorzugt von 0,3 mm bis 1 mm.

Es kann auch eine die Akustik verbessernde, geräuschdämpfende Folie als thermoplastische Zwischenschicht oder als Teil der thermoplastischen Zwischenschicht verwendet werden. Das ist insbesondere dann vorteilhaft, wenn die Verbundscheibe als Dachscheibe vorgesehen ist. Über Dachscheiben können insbesondere bei Regen und Hagel störende Geräusche in den Innenraum gelangen, was durch eine geräuschdämpfende Folie verringert wird.

Die erfindungsgemäße Verbundscheibe weist bevorzugt eine innenraumseitige Emissivität von höchstens 50 % auf, besonders bevorzugt höchstens 30 % und ganz besonders bevorzugt von höchstens 25 %. Mit Emissivität wird hierbei der normale Gesamtemissionsgrad bezeichnet.

Die erfindungsgemäße Verbundscheibe weist bevorzugt ein außenseitiges Reflexionsvermögen im Spektralbereich eines normgerechten D65-Strahlers bei einem Einfallswinkel von 10° von größer als 10 %, besonders bevorzugt größer als 25 % auf.

Die erfindungsgemäße Verbundscheibe weist bevorzugt ein innenraumseitiges Reflexionsvermögen im Spektralbereich eines normgerechten D65-Strahlers bei einem Einfallswinkel von 10° von größer als 5 %, besonders bevorzugt größer als 8 % auf.

Die erfindungsgemäße Verbundscheibe weist bevorzugt ein innenraumseitiges Reflexionsvermögen im sichtbaren Spektralbereich einer normgerechten Lichtquelle der Lichtart A bei einem Einfallswinkel von 10° von kleiner als 7 %, besonders bevorzugt kleiner als 5 % auf.

Die erfindungsgemäße Verbundscheibe weist bevorzugt eine Transmission zum Innenraum hin im Spektralbereich eines normgerechten D65-Strahlers bei einem Einfallswinkel von 10° von kleiner als 10 %, besonders bevorzugt kleiner als 5 % auf.

Die erfindungsgemäße Verbundscheibe weist eine Transmission zum Innenraum hin im sichtbaren Spektralbereich eines normgerechten D65-Strahlers bei einem Einfallswinkel von 10° von kleiner als 25 %, besonders bevorzugt kleiner als 10 %, ganz besonders bevorzugt kleiner als 5% auf.

Die erfindungsgemäße Verbundscheibe weist bevorzugt eine Transmission zum Innenraum hin im sichtbaren Spektralbereich einer normgerechten Lichtquelle der Lichtart A bei einem Einfallswinkel von 10° von größer als 1 %, besonders bevorzugt größer als 1,5 %, ganz besonders bevorzugt größer als 2 % auf. Damit ist die Scheibe nicht vollkommen opak, so dass ein optischer Eindruck von Objekten hinter der Scheibe wahrgenommen werden kann.

Ein außenseitiges Reflexionsvermögen beschreibt dabei den reflektierten Anteil der von der äußeren Umgebung, der die Außenscheibe zugewandt ist, einfallenden Strahlung. Ein innenraumseitiges Reflexionsvermögen beschreibt den reflektierten Anteil der vom Innenraum, dem die Innenscheibe zugewandt ist, einfallenden Strahlung.

Die Erfindung umfasst weiter ein Verfahren zur Herstellung einer wie oben beschriebenen Verbundscheibe mit Sonnenschutz- und Wärmeschutzfunktion, wobei zumindest
- eine Sonnenschutzbeschichtung umfassend mindestens eine funktionelle Schicht, die zumindest Silber enthält, auf die Innenfläche einer Außenscheibe oder auf die Außenfläche einer Innenscheibe aufgebracht oder in die thermoplastische Zwischenschicht eingebracht wird,
- eine Wärmeschutzbeschichtung umfassend mindestens eine funktionelle Schicht, die zumindest ein Metall aus der Gruppe bestehend aus Niob, Tantal, Molybdän und Zirkonium enthält, auf die Innenfläche einer Innenscheibe aufgebracht wird und danach
- die Außenscheibe und die Innenscheibe über die thermoplastische Zwischenschicht zur Verbundscheibe verbunden werden.

Die Außenscheibe und die Innenscheibe werden so miteinander verbunden, dass die Innenfläche der Außenscheibe und die Außenfläche der Innenscheibe einander zugewandt sind.

Das Aufbringen der Sonnenschutzbeschichtung kann zeitlich vor, zeitlich nach oder gleichzeitig mit dem Aufbringen der Wärmeschutzbeschichtung erfolgen. Das Verbinden von Außenscheibe und Innenscheibe zum Verbundglas erfolgt, nachdem sowohl die Sonnenschutzbeschichtung als auch die Wärmeschutzbeschichtung aufgebracht worden sind.

Die thermoplastische Zwischenschicht kann in Form einer thermoplastischen Folie bereitgestellt werden. Die thermoplastische Zwischenschicht kann aber auch in Form mehrerer Folien, beispielsweise zweier thermoplastischen Folien und einer Trägerfolie bereitgestellt werden. Das Aufbringen der Sonnenschutzbeschichtung auf die thermoplastische Zwischenschicht beinhaltet dabei nur das Aufbringen der Sonnenschutzbeschichtung auf eine der Folien, beispielsweise auf die Trägerfolie. Die Trägerfolie wird beim Verbinden der Scheibe zum Verbundglas bevorzugt zwischen den beiden thermoplastischen Folien angeordnet.

Die einzelnen Schichten der Sonnenschutzbeschichtung sowie der Wärmeschutzbeschichtung werden durch an sich bekannte Verfahren, bevorzugt durch magnetfeldunterstützte Kathodenzerstäubung abgeschieden. Die Kathodenzerstäubung erfolgt in einer Schutzgasatmosphäre, beispielsweise aus Argon, oder in einer Reaktivgasatmosphäre, beispielsweise durch Zugabe von Sauerstoff oder Stickstoff. Die einzelnen Schichten können aber auch durch andere geeignete, dem Fachmann bekannte Verfahren, beispielsweise Aufdampfen oder chemische Gasphasenabscheidung aufgebracht werden.

Die Erfindung umfasst weiter die Verwendung der erfindungsgemäßen Verbundscheibe mit Sonnenschutz- und Wärmeschutzfunktion in Gebäuden oder in Fortbewegungsmitteln für den Verkehr auf dem Lande, in der Luft oder zu Wasser, insbesondere als Heckscheibe, Seitenscheibe und / oder Dachscheibe in Kraftfahrzeugen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine erste Ausgestaltung der erfindungsgemäßen Verbundscheibe mit Sonnenschutz- und Wärmeschutzfunktion,
- Fig. 2: einen Querschnitt durch eine weitere Ausgestaltung der erfindungsgemäßen Verbundscheibe mit Sonnenschutz- und Wärmeschutzfunktion,
- Fig. 3: einen Querschnitt durch eine weitere Ausgestaltung der erfindungsgemäßen Verbundscheibe mit Sonnenschutz- und Wärmeschutzfunktion,
- Fig.4: ein Ausführungsbeispiel des erfindungsgemäßen Verfahrens anhand eines Flussdiagramms und
- Fig. 5: ein weiteres Ausführungsbeispiel des erfindungsgemäßen Verfahrens anhand eines Flussdiagramms.

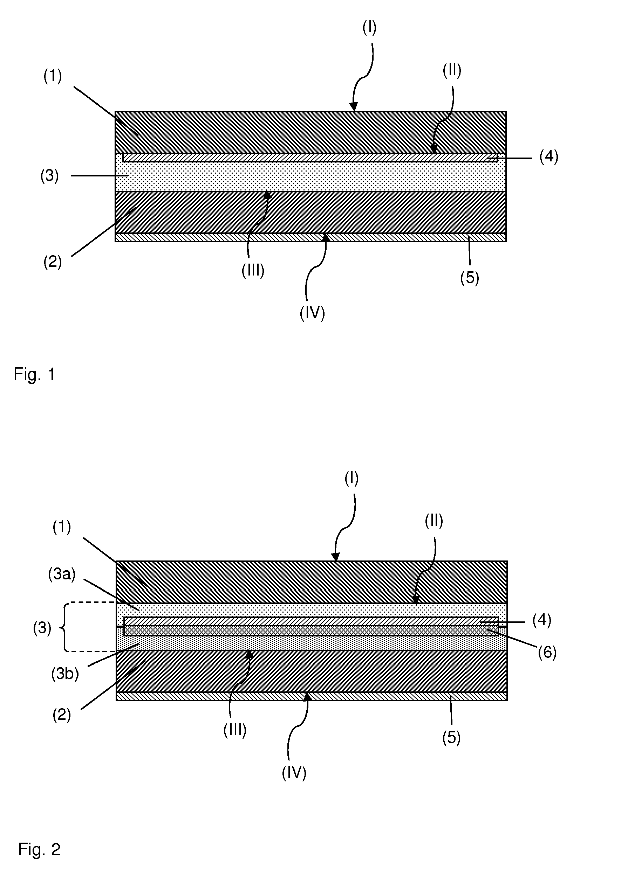

Fig. 1 zeigt einen Querschnitt durch eine Ausgestaltung der erfindungsgemäßen Verbundscheibe mit Sonnenschutz- und Wärmeschutzfunktion. Die Verbundscheibe umfasst eine Außenscheibe 1 und eine Innenscheibe 2, die über eine thermoplastische Zwischenschicht 3 miteinander verbunden sind. Die Verbundscheibe weist eine Größe von etwa 1 m² auf und ist als Dachscheibe eines Personenkraftwagens vorgesehen, wobei die Außenscheibe 1 der äußeren Umgebung und die Innenscheibe 2 dem Fahrzeuginnenraum zugewandt ist. Die Außenscheibe 1 weist eine Außenfläche (I) und eine Innenfläche (II) auf. Die Innenscheibe 2 weist eine Außenfläche (III) und eine Innenfläche (IV) auf. Die Außenflächen (I) und (III) sind der äußeren Umgebung zugewandt, die Innenflächen (II) und (IV) sind dem Fahrzeuginnenraum zugewandt. Die Innenfläche (II) der Außenscheibe 1 und die Außenfläche (III) der Innenscheibe 2 sind einander zugewandt. Die Außenscheibe 1 und die Innenscheibe 2 enthalten Natron-Kalk-Glas und weisen jeweils eine Dicke von 2,1 mm auf. Die thermoplastische Zwischenschicht 3 enthält oder besteht aus Polyvinylbutyral (PVB) und weist eine Dicke von 0,76 mm auf.

Auf der Innenfläche (II) der Außenscheibe 1 ist eine Sonnenschutzbeschichtung 4 angeordnet. Die Sonnenschutzbeschichtung 4 erstreckt sich über die gesamte Innenfläche (II) abzüglich eines umlaufenden rahmenförmigen beschichtungsfreien Bereichs mit einer Breite von 8 mm. Der beschichtungsfreie Bereich ist durch Verkleben mit der thermoplastischen Zwischenschicht 3 hermetisch versiegelt. Die Sonnenschutzbeschichtung 4 ist dadurch vorteilhaft vor Beschädigungen und Korrosion geschützt. Die Sonnenschutzbeschichtung 4 umfasst beispielsweise zumindest zwei funktionelle Schichten, welche zumindest Silber enthalten oder aus Silber bestehen und eine Schichtdicke zwischen 10 nm und 20 nm aufweisen, wobei jede funktionelle Schicht zwischen zwei dielektrischen Schichten aus Siliziumnitrid mit einer Dicke von 40 nm bis 70 nm angeordnet ist.

Auf der Innenfläche (IV) der Innenscheibe 2 ist eine Wärmeschutzbeschichtung 5 angeordnet. Die Wärmeschutzbeschichtung 5 umfasst mehrere Schichten, die in der angegebenen Reihenfolge auf der Innenscheibe 2 angeordnet sind:
Innenscheibe / Si₃N₄ / Ti / Nb / Ti / Si₃N₄ / Ti / Nb / Ti / Si₃N₄

Die Wärmeschutzbeschichtung 5 umfasst zwei funktionelle Schichten, welche zumindest Niob (Nb) enthalten oder aus Niob bestehen. Die funktionellen Schichten weisen beispielsweise jeweils eine Dicke von etwa 10 nm auf. Die funktionellen Schichten können auch unterschiedliche Dicken aufweisen. Beispielsweise kann diejenige funktionelle Schicht mit geringerem Abstand zur Innenscheibe 2 eine Dicke von 15 nm bis 20 nm aufweisen und diejenige funktionelle Schicht mit größerem Abstand zur Innenscheibe 2 ein Dicke von 3 nm bis 7 nm aufweisen. Jede funktionelle Schicht ist zwischen zwei Opferschichten angeordnet, die zumindest Titan enthalten oder aus Titan bestehen. Die Opferschichten weisen beispielsweise eine Dicke von etwa 1 nm auf. Der Verbund aus jeder funktionellen Schicht und den beiden sie umgebenden Opferschichten ist zwischen zwei dielektrischen Schichten angeordnet. Die dielektrischen Schichten enthalten zumindest oder bestehen aus Siliziumnitrid (Si₃N₄). Jede dielektrische Schicht weist beispielsweise eine Dicke von 40 nm bis 55 nm auf.

Die erfindungsgemäße Sonnenschutzbeschichtung führt zu einer verringerten Aufheizung des Fahrzeuginnenraums und der Innenscheibe 2 aufgrund der Reflexion von infraroter Strahlung. Die Wärmeschutzbeschichtung 5 verringert einerseits die Abstrahlung von Wärmestrahlung durch die Verbundscheibe in den Fahrzeuginnenraum, insbesondere bei hohen Außentemperaturen. Die Wärmeschutzbeschichtung 5 verringert andererseits die Abstrahlung von Wärmestrahlung aus dem Fahrzeuginnenraum bei niedrigen Außentemperaturen.

Zudem verringert die Wärmeschutzbeschichtung 5 die Transmission von sichtbarem Licht in den Fahrzeuginnenraum, so dass keine oder in einem geringeren Maße getönte Scheibe verwendet werden müssen, wenn eine solche verringerte Transmission erwünscht ist, beispielsweise bei Dachscheiben. Das sind große Vorteile der erfindungsgemäßen Verbundscheibe, da das Raumklima des Fahrzeuginnenraums deutlich verbessert wird und die Notwendigkeit des Einsatzes von Klimaanlagen vermindert wird.

Sowohl die Sonnenschutzbeschichtung 4 als auch die Wärmeschutzbeschichtung 5 sind thermisch hoch belastbar, so dass sie auch eine Temperaturbehandlung oder ein Biegen der Scheiben 1, 2 bei Temperaturen von typischerweise mehr als 600 °C ohne Beschädigung überstehen.

Fig. 2 zeigt einen Querschnitt durch eine weitere Ausgestaltung der erfindungsgemäßen Verbundscheibe mit Sonnenschutz- und Wärmeschutzfunktion. Die Außenscheibe 1 und die Innenscheibe 2 enthalten Natron-Kalk-Glas und weisen jeweils eine Dicke von 2,1 mm auf. Im Unterschied zur Figur 1 ist die Sonnenschutzbeschichtung 4 nicht auf der Innenfläche (II) der Außenscheibe 1 angeordnet, sondern auf einer Trägerfolie 6. Die Trägerfolie 6 enthält oder besteht aus Polyethylenterephthalat (PET) und weist eine Dicke von 50 µm auf. Die Sonnenschutzschicht 4 umfasst einen Schichtaufbau, der zumindest eine silberhaltige Funktionsschicht enthält. Die mit der Sonnenschutzschicht 4 versehene Trägerfolie 6 ist kommerziell erhältlich (Southwall Technologies, XIR 75). Die Trägerfolie 6 mit der Sonnenschutzbeschichtung 4 ist zwischen einer ersten thermoplastischen Folie 3a und einer zweiten thermoplastischen Folie 3b angeordnet. Die thermoplastischen Folien 3a und 3b sowie die Trägerschicht 6 bilden die thermoplastische Zwischenschicht 3. Die thermoplastischen Folie 3a und 3b enthalten oder bestehen aus PVB und weisen eine Schichtdicke von 0,38 mm auf. Die Trägerfolie 6 weist eine etwas geringere Größe auf als die Außenscheibe 1, die Innenscheibe 2 und die thermoplastischen Folien 3a und 3b. Die Trägerfolie 6 ist so in dem Verbund angeordnet, dass sich die Trägerfolie 6 nicht bis zu den seitlichen Rändern des Verbundglases erstreckt. Die Trägerfolie 6 ist dadurch im Randbereich der Verbundscheibe mit einer Breite von etwa 8 mm umlaufend von den thermoplastischen Folien 3a und 3b umgeben. Die Sonnenschutzbeschichtung 4 auf der Trägerfolie 6 ist somit vorteilhaft vor Beschädigungen und insbesondere Korrosion geschützt. Die Wärmeschutzbeschichtung 5 auf der Innenfläche (III) der Innenscheibe 2 ist wie in Figur 1 ausgestaltet.

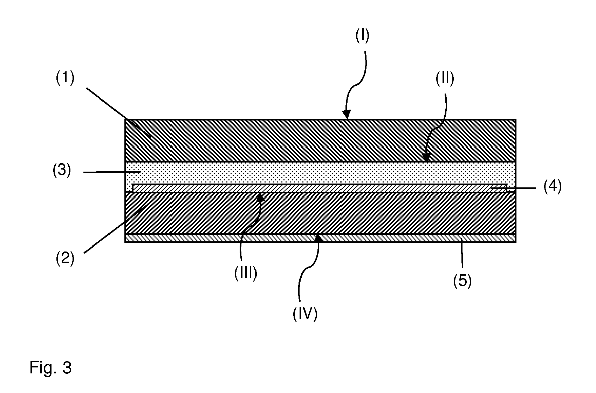

Fig. 3 zeigt einen Querschnitt durch eine weitere Ausgestaltung der erfindungsgemäßen Verbundscheibe mit Sonnenschutz- und Wärmeschutzfunktion. Im Unterschied zur Figur 1 ist die Sonnenschutzbeschichtung 4 nicht auf der Innenfläche (II) der Außenscheibe 1 angeordnet, sondern auf der Außenfläche (III) der Innenscheibe 2, wobei ein umlaufender Randbereich der Außenfläche (III) mit einer Breite von etwa 8 mm nicht mit der Sonnenschutzbeschichtung 4 versehen ist. Die Sonnenschutzbeschichtung 4 ist auch in dieser Ausgestaltung vorteilhaft vor Beschädigungen und Korrosion geschützt. Die Wärmeschutzbeschichtung 5 auf der Innenfläche (IV) der Innenscheibe 2 ist wie in Figur 1 ausgestaltet.

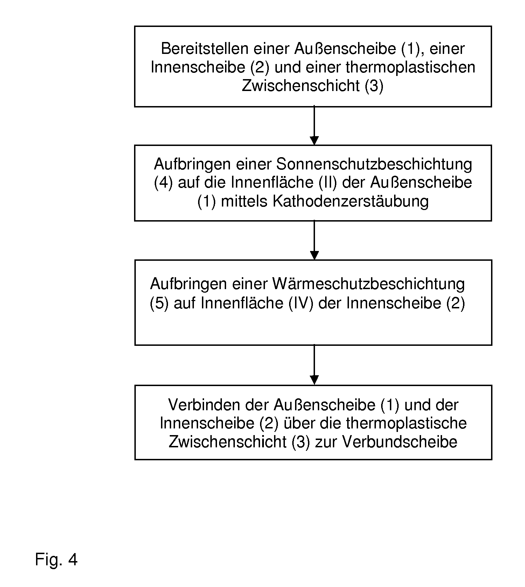

Fig. 4 zeigt ein Flussdiagramm eines Ausführungsbeispiels des erfindungsgemäßen Verfahrens zur Herstellung einer Verbundscheibe mit Sonnenschutz- und Wärmeschutzfunktion.

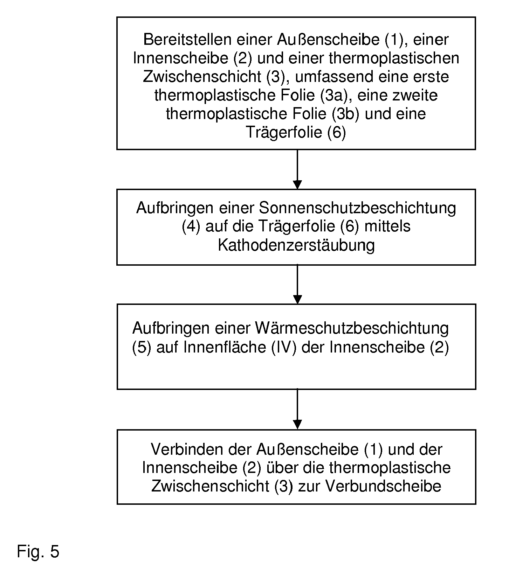

Fig. 5 zeigt ein Flussdiagramm eines weiteren Ausführungsbeispiels des erfindungsgemäßen Verfahrens zur Herstellung einer Verbundscheibe mit Sonnenschutz- und Wärmeschutzfunktion.

### Beispiel

Die Emissivität sowie die optischen Eigenschaften einer Testscheibe gemäß Figur 2 sind in Tabelle 1 und Tabelle 2 zusammengefasst. Die Außenscheibe 1 und die Innenscheibe 2 waren klar oder annähernd klar. Die in den Tabellen angegebenen Werte wurden durch Messungen gemäß ISO-Norm 9050 (AM 1.5) unter standardisierten Messbedingungen gewonnen. Der Einfallswinkel des Lichts auf die erfindungsgemäße Verbundscheibe betrug 10°.

Die Tabelle gibt die normale Emissivität εₙ an. Die Transmission T_{L}(A) bezeichnet die in den Fahrzeuginnenraum transmittierte Strahlungsenergie im lichtoptischen Strahlungsbereich einer normgerechten Lichtquelle der Lichtart A. Die Transmission T_{L}(D65) bezeichnet die in den Fahrzeuginnenraum transmittierte Strahlungsenergie im lichtoptischen Strahlungsbereich eines normgerechten Strahlers D65. Die Transmission T_{E} bezeichnet die in den Fahrzeuginnenraum transmittierte Strahlungsenergie des kompletten Spektrums des Strahlers D65. Weiter sind die innenseitige Reflexion (in den Fahrzeuginnenraum reflektiertes Licht) und die außenseitige Reflexion (zur äußeren Umgebung reflektiertes Licht) charakterisiert. R_{L}(A) bezeichnet hierbei die reflektierte Strahlungsenergie im lichtoptischen Strahlungsbereich der Lichtart A und R_{E} die reflektierte Strahlungsenergie des kompletten Spektrums des Strahlers D65. Die Angaben a* und b* beziehen sich auf die Farbkoordinaten gemäß dem kolorimetrischen Modell (L*a*b*-Farbraum, Strahler D65).

### Vergleichsbeispiel

Zum Vergleich wurde eine herkömmliche, weit verbreitete getönte Verbundscheibe für Dachscheiben ohne Sonnenschutzbeschichtung 4 und ohne Wärmeschutzbeschichtung 5 charakterisiert. Die entsprechenden Messwerte sind in Tabelle 1 und Tabelle 2 angegeben.

**Tabelle 1**

| | | Transmission | | | | |
|---|---|---|---|---|---|---|
| | εₙ | T_{L}(A) | T_{L}(D65) | T_{E} | a* | b* |
| Vergleichsbeispiel | 0,84 | 21% | 22% | 12% | -7,7 | 2,0 |
| Beispiel | 0,20 | 4% | 4% | 3% | 0,9 | 2,6 |

**Tabelle 2**

| | innenseitige Reflexion | | | | außenseitige Reflexion | | | |
|---|---|---|---|---|---|---|---|---|
| | R_{L}(A) | R_{E} | a* | b* | R_{L}(A) | R_{E} | a* | b* |
| Vergleichsbeispiel | 5% | 4% | -0,4 | 0,1 | 5% | 4% | -0,4 | 0,1 |
| Beispiel | 3% | 12% | -5,1 | -22,1 | 20% | 31% | -2,2 | 4,5 |

Die erfindungsgemäße Verbundscheibe mit der Sonnenschutzbeschichtung 4 und der Wärmeschutzbeschichtung 5 weist im Vergleich zur herkömmlichen Verbundscheibe eine deutlich verringerte Transmission auf. Dies wird einerseits durch die erfindungsgemäße Wärmeschutzbeschichtung 5 (T_{L}(A), T_{L}(D65) und T_{E}), andererseits durch die erfindungsgemäße, im sichtbaren Spektralbereich weitgehend transparente Sonnenschutzbeschichtung 4 (T_{E}) erreicht. Die innenseitige Reflexion im lichtoptischen Bereich R_{L}(A) ist bei der erfindungsgemäßen Verbundscheibe gegenüber der Vergleichscheibe verringert, was zu einem angenehmeren optischen Eindruck für die Insassen führt. Die innenseitige Reflexion im gesamten Strahlungsbereich des D65-Strahlers ist bei der erfindungsgemäßen Verbundscheibe jedoch deutlich erhöht, was auf einen erhöhten reflektierten Anteil von Strahlung außerhalb des sichtbaren Bereichs, insbesondere im infraroten Bereich hinweist. Die erfindungsgemäße Verbundscheibe weist also ein besonders gutes Reflexionsvermögen für Wärmestrahlung aus dem Fahrzeuginnenraum auf. Die normale Emissivität εₙ ist mit 0,20 sehr gering. Die erfindungsgemäße Verbundscheibe gibt also nur relativ wenig Wärmestrahlung in den Fahrzeuginnenraum ab. Die außenseitigen Reflexionen R_{L}(A) und R_{E} sind bei der erfindungsgemäßen Verbundscheibe deutlich erhöht. Die Erhöhung ist bei der Reflexion R_{E} im gesamten Strahlungsbereich deutlich ausgeprägter als bei der Reflexion R_{L}(A) im sichtbaren Bereich, was auf die Reflexion von infraroter Strahlung durch die Sonnenschutzschicht 4 zurückzuführen ist.

Durch die erfindungsgemäße Sonnenschutzbeschichtung 4 wird ein Teil der einfallenden Sonnenstrahlung im infraroten Spektralbereich reflektiert. Daraus ergibt sich eine geringere Erwärmung des Fahrzeuginnenraums sowie der in Ausbreitungsrichtung der einfallenden Strahlung hinter der Sonnenschutzbeschichtung 4 angeordneten Bestandteile der Verbundscheibe, insbesondere der Innenscheibe 2. Die geringere Erwärmung der Innenscheibe 2 führt zu einer verringerten Wärmestrahlung der Innenscheibe 2 in den Fahrzeuginnenraum. Zudem wird die Wärmestrahlung der Innenscheibe 2 in den Fahrzeuginnenraum durch die erfindungsgemäße Wärmeschutzbeschichtung 5 weiter verringert. Die Wärmeschutzbeschichtung 5 verringert außerdem bei niedrigen Außentemperaturen die Abstrahlung von (infraroter) Wärmestrählung aus dem Innenraum heraus. Zudem führt die erfindungsgemäße Wärmeschutzbeschichtung 5 zu einer verringerten Transmission von sichtbarem Licht in den Fahrzeuginnenraum, so dass im Vergleich zum Stand der Technik keine oder zumindest weniger stark getönte Scheibe oder Polymerschichten verwendet werden können.

Die Kombination der erfindungsgemäßen Sonnenschutzbeschichtung 4 mit der erfindungsgemäßen Wärmeschutzbeschichtung 5 führt also zu einer deutlichen Verbesserung des Raumklimas im Fahrzeuginnenraum sowohl im Sommer als auch im Winter. Dieses Ergebnis war für den Fachmann unerwartet und überraschend.

### Bezugszeichenliste:

- (1): Außenscheibe
- (2): Innenscheibe
- (3): thermoplastische Zwischenschicht
- (3a): erste thermoplastische Folie
- (3b): zweite thermoplastische Folie
- (4): Sonnenschutzbeschichtung
- (5): Wärmeschutzbeschichtung
- (6): Trägerfolie

- (I): Außenfläche von (1)
- (II): Innenfläche von (1)
- (III): Außenfläche von (2)
- (IV): Innenfläche von (2)

## Patentansprüche

1. Verbundscheibe mit Sonnenschutz- und Wärmeschutzfunktion aus einer Außenscheibe (1) mit einer Außenfläche (I) und einer Innenfläche (II), einer Innenscheibe (2) mit einer Außenfläche (III) und einer Innenfläche (IV) und einer thermoplastischen Zwischenschicht (3), mindestens umfassend
- eine Sonnenschutzbeschichtung (4) mindestens auf der Innenfläche (II), auf der Außenfläche (III) oder in der thermoplastischen Zwischenschicht (3) und
- eine Wärmeschutzbeschichtung (5) auf der Innenfläche (IV),
wobei die Sonnenschutzbeschichtung (4) mindestens eine funktionelle Schicht umfasst, die zumindest Silber enthält, und wobei die Wärmeschutzbeschichtung (5) mindestens eine funktionelle Schicht umfasst, die zumindest ein Metall aus der Gruppe bestehend aus Niob, Tantal, Molybdän und Zirkonium enthält,
wobei die Außenscheibe (1) und die Innenscheibe (2) eine Transmission im sichtbaren Spektralbereich von größer 70 % aufweisen und wobei die Verbundscheibe eine Transmission im sichtbaren Spektralbereich von kleiner als 10 % aufweist.

2. Verbundscheibe nach Anspruch 1, wobei die Wärmeschutzbeschichtung (5) mindestens zwei funktionelle Schichten umfasst, die zumindest ein Metall aus der Gruppe bestehend aus Niob, Tantal, Molybdän und Zirkonium enthalten.

3. Verbundscheibe nach Anspruch 1 oder 2, wobei jede funktionelle Schicht der Wärmeschutzbeschichtung (5) eine Dicke von 1 nm bis 35 nm, bevorzugt von 3 nm bis 25 nm aufweist und wobei die Gesamtdicke aller funktionellen Schichten bevorzugt kleiner oder gleich 50 nm beträgt.

4. Verbundscheibe nach einem der Ansprüche 1 bis 3, wobei zumindest eine, bevorzugt jede funktionelle Schicht der Wärmeschutzbeschichtung (5) zwischen zwei transparenten, dielektrischen Schichten angeordnet ist, welche bevorzugt zumindest Siliziumnitrid enthalten und bevorzugt eine Dicke von 5 nm bis 120 nm, besonders bevorzugt von 10 nm bis 70 nm, ganz besonders bevorzugt von 40 nm bis 60 nm aufweisen.

5. Verbundscheibe nach einem der Ansprüche 1 bis 4, wobei die Wärmeschutzbeschichtung (5) mindestens eine Opferschicht zwischen zumindest einer funktionellen Schicht und zumindest einer dielektrischen Schicht umfasst, die bevorzugt zumindest Titan und / oder Nickelchrom enthält.

6. Verbundscheibe nach einem der Ansprüche 1 bis 5, wobei die Sonnenschutzbeschichtung (4) zumindest zwei, bevorzugt zwei oder drei funktionelle Schichten umfasst, die zumindest Silber enthalten, und wobei jede funktionelle Schicht bevorzugt zwischen zwei transparenten, dielektrischen Schichten angeordnet ist, welche bevorzugt zumindest Siliziumnitrid enthalten.

7. Verbundscheibe nach einem der Ansprüche 1 bis 6, wobei die thermoplastische Zwischenschicht (3) eine Trägerfolie (6) enthält, welche die Sonnenschutzbeschichtung (4) aufweist.

8. Verbundscheibe nach einem der Ansprüche 1 bis 7, die eine innenraumseitige Emissivität von höchstens 50 %, bevorzugt höchstens 30 % und besonders bevorzugt von höchstens 25 % aufweist.

9. Verbundscheibe nach einem der Ansprüche 1 bis 8, die ein außenseitiges Reflexionsvermögen im Spektralbereich eines normgerechten D65-Strahlers von größer als 10 %, besonders bevorzugt größer als 25 % aufweist.

10. Verbundscheibe nach einem der Ansprüche 1 bis 9, die ein innenraumseitiges Reflexionsvermögen im Spektralbereich eines normgerechten D65-Strahlers von größer als 5 %, besonders bevorzugt größer als 8 % aufweist.

11. Verfahren zur Herstellung einer Verbundscheibe nach einem der Ansprüche 1 bis 10, wobei zumindest
- eine Sonnenschutzbeschichtung (4) umfassend mindestens eine funktionelle Schicht, die zumindest Silber enthält, auf die Innenfläche (II) oder auf die Außenfläche (III) aufgebracht oder in die thermoplastische Zwischenschicht (3) eingebracht wird,
- eine Wärmeschutzbeschichtung (5) umfassend mindestens eine funktionelle Schicht, die zumindest ein Metall aus der Gruppe bestehend aus Niob, Tantal, Molybdän und Zirkonium enthält, auf die Innenfläche (IV) aufgebracht wird und danach
- die Außenscheibe (1) und die Innenscheibe (2) über die thermoplastische Zwischenschicht (3) zur Verbundscheibe verbunden werden.

12. Verwendung der Verbundscheibe mit Sonnenschutz- und Wärmeschutzfunktion nach einem der Ansprüche 1 bis 10 in Gebäuden oder in Fortbewegungsmitteln für den Verkehr auf dem Lande, in der Luft oder zu Wasser, insbesondere als Heckscheibe, Seitenscheibe und / oder Dachscheibe von Kraftfahrzeugen.

## Claims

1. Composite pane with a sun protection and a heat protection function comprising an outer pane (1) with an outer surface (I) and an inner surface (II), an inner pane (2) with an outer surface (III) and an inner surface (IV), and a thermoplastic intermediate layer (3), comprising at least
- a sun protection coating (4) at least on the inner surface (II), on the outer surface (III), or in the thermoplastic intermediate layer (3), and
- a heat protection coating (5) on the inner surface (IV),
wherein the sun protection coating (4) comprises at least one functional layer, which contains at least silver, and wherein the heat protection coating (5) comprises at least one functional layer, which contains at least one metal from the group consisting of niobium, tantalum, molybdenum, and zirconium, wherein the outer pane (1) and the inner pane (2) have a transmission in the visible spectral range greater than 70%, and wherein the composite pane has a transmission in the visible spectral range of less than 25%, particularly preferably less than 10%.

2. Composite pane according to claim 1, wherein the heat protection coating (5) comprises at least two functional layers, which contain at least one metal from the group consisting of niobium, tantalum, molybdenum, and zirconium.

3. Composite pane according to claim 1 or 2, wherein each functional layer of the heat protection coating (5) has a thickness of 1 nm to 35 nm, preferably of 3 nm to 25 nm, and wherein the total thickness of all functional layers is preferably less than or equal to 50 nm.

4. Composite pane according to one of claims 1 through 3, wherein at least one, preferably each functional layer of the heat protection coating (5) is arranged between two transparent, dielectric layers, which preferably include at least silicon nitride and preferably have a thickness of 5 nm to 120 nm, particularly preferably of 10 nm to 70 nm, quite particularly preferably of 40 nm to 60 nm.

5. Composite pane according to one of claims 1 through 4, wherein the heat protection coating (5) comprises at least one sacrificial layer between at least one functional layer and at least one dielectric layer, which preferably contains at least titanium and / or nickel chromium.

6. Composite pane according to one of claims 1 through 5, wherein the sun protection coating (4) comprises at least two, preferably two or three functional layers, which contain at least silver, and wherein each functional layer is preferably arranged between two transparent, dielectric layers, which preferably contain at least silicon nitride.

7. Composite pane according to one of claims 1 through 6, wherein the thermoplastic intermediate layer (3) contains a carrier film (6), which has the sun protection coating (4).

8. Composite pane according to one of claims 1 through 7, which has an interior-side emissivity of at most 50%, preferably of at most 30%, and particularly preferably of at most 25%.

9. Composite pane according to one of claims 1 through 8, which has an outside reflectivity in the spectral range of a standard illuminant D65 of more than 10%, particularly preferably more than 25%.

10. Composite pane according to one of claims 1 through 9, which has an interior-side reflectivity in the spectral range of a standard illuminant D65 of more than 5%, particularly preferably more than 8%.

11. Method for producing a composite pane according to one of claims 1 through 10, wherein at least
- a sun protection coating (4) comprising at least one functional layer, which contains at least silver, is applied on the inner surface (II) or on the outer surface (III) or is introduced into the thermoplastic intermediate layer (3),
- a heat protection coating (5) comprising at least one functional layer, which contains at least one metal from the group consisting of niobium, tantalum, molybdenum, and zirconium, is applied on the inner surface (IV), and thereafter
- the outer pane (1) and the inner pane (2) are bonded via the thermoplastic intermediate layer (3) to form the composite pane.

12. Use of the composite pane with a sun protection and a heat protection function according to one of claims 1 through 10 in buildings or in means of transportation for travel on land, in the air, or on water, in particular as a rear window, side window, and / or roof panel of motor vehicles.

## Revendications

1. Vitrage feuilleté avec fonction de protection solaire et de protection thermique comprenant au moins une vitre extérieure (1) avec une surface externe (I) et une surface interne (II), une vitre intérieure (2) avec une surface externe (III) et une surface interne (IV) et une couche intermédiaire thermoplastique (3) comprenant au moins,
- un revêtement de protection solaire (4) au moins sur la surface interne (II), sur la surface externe (III) ou dans la couche intermédiaire thermoplastique (3) et
- un revêtement de protection thermique (5) sur la surface intérieure (IV), où le revêtement de protection solaire (4) comprend au moins une couche fonctionnelle, qui contient au moins de l'argent et où le revêtement de protection thermique (5) comprend au moins une couche fonctionnelle qui contient au moins un métal du groupe composé de niobium, molybdène, tantale et zirconium, où la vitre extérieure (1) et la vitre intérieure (2) présentent une transmission dans la gamme spectrale visible supérieure à 70% et où le vitrage feuilleté présente une transmission dans la plage spectrale visible inférieure à 10%.

2. Vitrage feuilleté selon la revendication 1, où le revêtement de protection thermique (5) comprend au moins deux couches fonctionnelles qui contiennent au moins un métal du groupe composé de niobium, molybdène, tantale et zirconium.

3. Vitrage feuilleté selon la revendication 1 ou 2, où chaque couche fonctionnelle du revêtement de protection thermique (5) présente une épaisseur comprise entre 1 nm et 35 nm, de préférence de 3 nm à 25 nm et où l'épaisseur totale de toutes les couches fonctionnelles est préférence inférieure ou égale à 50 nm.

4. Vitrage feuilleté selon une des revendications 1 à 3, où au moins une, de préférence chaque couche fonctionnelle du revêtement de protection thermique (5) est disposée entre deux couches diélectriques transparentes, qui contiennent de préférence au moins de la nitrure de silicium et présentent de préférence une épaisseur comprise entre 5 nm et 120 nm, de façon particulièrement préférée de 10 nm à 70 nm, et de façon tout particulièrement préférée de 40 nm à 60 nm.

5. Vitrage feuilleté selon l'une des revendications 1 à 4, où le revêtement de protection thermique (5) comprend au moins une couche sacrificielle entre au moins une couche fonctionnelle et au moins une couche diélectrique, qui contient de préférence au moins du titane et/ou du nickel-chrome.

6. Vitrage feuilleté selon l'une des revendications 1 à 5, où le revêtement de protection solaire comprend (4) au moins deux, préférablement deux ou trois couches fonctionnelles qui contiennent au moins de l'argent, et où chaque couche fonctionnelle est de préférence disposée entre deux couches transparentes, diélectriques, qui contiennent de préférence au moins de la nitrure de silicium.

7. Vitrage feuilleté selon l'une des revendications 1 à 6, où la couche intermédiaire thermoplastique (3) contient une feuille de support (6), qui présente le revêtement de protection solaire (4).

8. Vitrage feuilleté selon l'une des revendications 1 à 7, qui présente une émissivité côté intérieur de 50% au maximum, de préférence pas supérieure à 30 % et de façon particulièrement préférée pas supérieure au 25%.

9. Vitrage feuilleté selon l'une des revendications 1 à 8, qui présente une réflectivité côté extérieur dans la gamme spectrale d'une lampe standard D65 supérieure à 10%, de façon particulièrement préférée supérieure à 25%.

10. Vitrage feuilleté selon l'une des revendications 1 à 9, qui présente une réflectivité côté intérieur dans I la gamme spectrale d'une lampe standard D65 supérieure à 5 %, de façon particulièrement préférée supérieure à 8%.

11. Méthode de fabrication d'un vitrage feuilleté selon l'une des revendications 1 à 10, où au moins
- un revêtement de protection solaire (4) comprenant au moins une couche fonctionnelle qui contient au moins de l'argent, est appliquée à la surface intérieure (II) ou sur la surface extérieure (III) ou incorporé dans la couche intermédiaire thermoplastique (3),
- une isolation thermique (5) comprenant au moins une couche fonctionnelle qui contient au moins un métal du groupe composé de niobium, tantale, molybdène et du zirconium, est appliqué sur la surface intérieure (IV), et ensuite
- la vitre extérieure (1) et la vitre intérieure (2) sont reliées à la couche intermédiaire thermoplastique (3) avec le vitrage feuilleté.

12. Utilisation d'un vitrage feuilleté avec fonction de protection solaire et de protection thermique selon l'une des revendications 1 à 10 dans les bâtiments ou dans les moyens de transport pour la circulation sur la terre, dans l'air ou sur l'eau, en particulier comme lunette arrière, vitre latérale et/ou toit vitré des véhicules à moteur.
